# EUROPÄISCHE PATENTANMELDUNG

(11) **EP 0 784 174 A2**
(43) Veröffentlichungstag der Anmeldung: **16.07.1997**
(21) Anmeldenummer: 97100064.1
(22) Anmeldetag: 03.01.1997
(51) Int. Cl.: F16K 31/00

(54) **Mit einer Armatur gekoppelter elektromotorischer Stellantrieb**

(30) Priorität: 12.01.1996 DE 19600940
(71) Anmelder: SIEMENS AKTIENGESELLSCHAFT, 80333 München (DE)
(72) Erfinder: Habersang, Jürgen, Dipl.-Ing., 76137 Karlsruhe (DE); Müller, Peter, Dipl.-Ing. (FH), 91126 Schwabach (DE); Altenburg, Hermann, Dipl.-Ing., 76870 Kandel (DE); Buchta, Gerd, Dipl.-Ing. (FH), 91227 Leinburg (DE); Grasser, Erich, Dipl.-Ing., 92334 Berching (DE); Linde, Hansjürgen, Prof.-Dr., 96450 Coburg (DE); Neumann, Uwe, Dipl.-Ing. (FH), 96414 Coburg (DE)

(57) **Zusammenfassung**

Die Erfindung betrifft einen mit einer Armatur gekoppelten elektromotorischen Stellantrieb, dessen Antriebsmotor (1) über eine Steuereinrichtung (12) in der einen oder anderen Drehrichtung ansteuerbar ist. Ein sicheres Losbrechen der Armatur aus der jeweiligen Endlage wird ohne Überdimensionierung des Antriebsmotors und ohne Steuerung auf ein höheres Drehmoment als das vorgegebene Abschaltmoment dadurch erreicht, daß vor einem betriebsmäßigen Verstellvorgang der Armatur (4) Schwingungen in diese eingeleitet oder Stöße auf diese ausgeübt werden.

## Beschreibung

Die Erfindung betrifft einen mit einer Armatur gekoppelten elektromotorischen Stellantrieb, dessen Antriebsmotor über eine Steuereinrichtung in der einen oder anderen Drehrichtung ansteuerbar ist.

Ein solcher Stellantrieb ist durch die DE-A-37 31 469 bekannt. Bei diesem bekannten Antrieb wird der Antriebsmotor über eine mittels einer Steuereinheit gesteuerten Leistungssteller gespeist. Durch Phasenanschnittssteuerung des Leistungsstellers wird bei diesem bekannten Antrieb das Drehmoment auf einen bestimmten Wert begrenzt. Als Drehmomentgrenzwert wird vorteilhafterweise das gewünschte Abschaltmoment, beispielsweise in der Zu-Stellung der Armatur vorgegeben.

Bei Armaturen kann es zum Beispiel nach längeren Stillstandszeiten zu Korrosionserscheinungen kommen, die dann ein Losbrechmoment erfordern, das höher als das vorgegebene Abschaltmoment ist. Außerdem können andere Einflüsse, z.B. Einbruch der Versorgungsspannung oder auch ungünstige Temperaturverhältnisse zu einer Drehmomentminderung des Antriebsmotors führen, so daß dieser nicht das für das Losbrechen der Armatur aus ihrer jeweiligen Endlage erforderliche Drehmoment aufbringen kann.

Bei Stellantrieben mit ungesteuerten Motoren ist es üblich den Antriebsmotor in seiner Leistung so auszulegen, daß er auch noch unter den ungünstigsten Umständen ein ausreichendes Losbrechmoment zu liefern vermag. Dies bedeutet allerdings eine starke Überdimensionierung des Antriebsmotors gegenüber den Erfordernissen des normalen Betriebes.

Der Erfindung liegt die Aufgabe zugrunde einen Stellantrieb der gattungsgemäßen Art so auszubilden, daß ohne Überdimensionierung des Antriebmotors und ohne Steuerung auf ein höheres Drehmoment als das vorgegebene Abschaltmoment, ein sicheres Losbrechen der Armatur aus der jeweiligen Endlage möglich ist.

Die Lösung dieser Aufgabe gelingt erfindungsgemäß dadurch, daß vor einem betriebsmäßigen Verstellvorgang der Armatur in diese Schwingungen eingeleitet oder Stöße auf diese ausgeübt werden. Durch die in die Armatur eingeleiteten Schwingungen oder die auf die Armatur ausgeübten Stöße wird die Verspannung des verstellbaren Gliedes der Armatur gelockert, so daß der Antriebsmotor in der Lage ist, die Armatur betriebsmäßig zu verstellen.

Stöße können dadurch auf die Armatur ausgeübt werden, daß dem Antriebsmotor über die Steuereinrichtung kurze Einschaltimpulse zumindest für die eine Drehrichtung erteilbar sind. Infolge solcher Einschaltimpulse läuft der Antriebsmotor an und beschleunigt seinen Läufer. Die hierdurch im Läufer enthaltene kinetische Energie bewirkt nach dem Durchfahren des zwischen dem Antriebsmotor und dem verstellbaren Glied der Armatur bestehenden Losewinkels einen Drehmomentstoß. Sobald die Spitze des auftretenden Drehmomentes während des zeitlichen Verlaufes des Drehmomentes größer als das Verspannungsmoment wird, wird das verstellbare Glied der Armatur aus seiner Endstellung gelöst.

Vorteilhaft ist es, wenn die zeitliche Länge der Einschaltimpulse mindestens der Zeit für das Durchfahren des zwischen dem Antriebsmotor und dem verstellbaren Glied der Armatur bestehenden Losewinkels entspricht. Damit erfolgt die Beschleunigung des Läufers über einen größtmöglichen Zeitraum, so daß die im Läufer gespeicherte kinetische Energie dann auch ihren höchsten Wert erreicht. Insbesondere dann, wenn das verstellbare Glied der Armatur in der betreffenden Endlage durch Korrosionsbildung besonders fest sitzt, ist es von Vorteil, daß dem Antriebsmotor abwechselnd Einschaltimpulse für die eine und die andere Drehrichtung erteilbar sind. Damit wirken die Drehmomentstöße sowohl in der Öffnungs- als der Schließrichtung auf das verstellbare Glied der Armatur, wodurch ein Lossprengen dieses Gliedes aus der betreffenden Endlage begünstigt wird.

Dadurch, daß der Steuereinrichtung ein die Drehrichtung der Welle des Antriebsmotors oder die Verstellbewegung des verstellbaren Armaturgliedes erfassender Sensor zugeordnet ist, kann das Losbrechen des verstellbaren Gliedes der Armatur aus der betreffenden Endlage überwacht werden. Die Einschaltimpulse können dann sofort nach dem Losbrechen des Armaturgliedes abgeschaltet und der normale Betrieb des Antriebes eingeleitet werden.

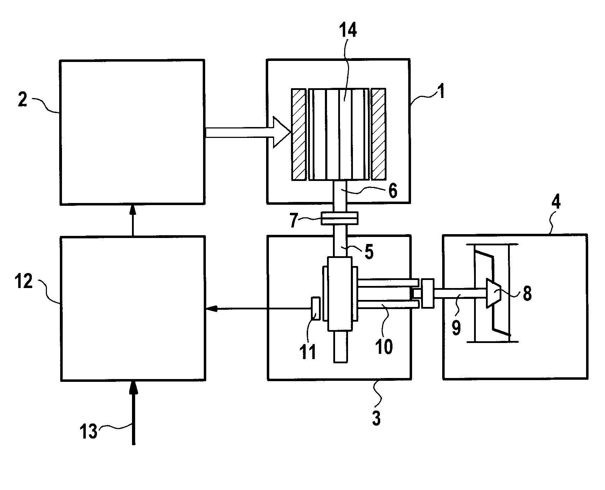

Anhand eines in der Zeichnung schematisch dargestellten Ausführungsbeispieles wird die Erfindung nachfolgend noch näher erläutert.

Mit 1 ist ein über einen Frequenzumrichter 2 gespeister Antriebsmotor bezeichnet, der über ein Getriebe 3 mit einer Armatur 4 gekoppelt ist. Das Getriebe 3 ist hierzu mit seiner Eingangswelle 5 mit der Welle 6 des Antriebsmotors 1 über ein Kupplungsglied 7 verbunden. Die Armatur 4 weist als verstellbares Glied einen Ventilteller 8 auf, der über seine Ventilstange 9 mit einer linearbeweglichen Stellspindel 10 des Getriebes 3 gekoppelt ist. Im Getriebe 3 wird somit die Drehbewegung der Motorwelle 6 in eine lineare Bewegung der Stellspindel 10 umgesetzt.

Im Getriebe 3 ist ferner ein Sensor 11 eingebaut, durch den entweder der Drehwinkel der Eingangswelle 5 oder der Verstellweg der Stellspindel 10 erfaßt werden kann. Die vom Sensor 11 abgegebenen Stellungssignale werden einer Steuereinrichtung 12 zugeführt, durch deren Steuerbefehle der Frequenzumrichter 2 und damit der Antriebsmotor 1 gesteuert wird.

Die Steuereinrichtung 12 ist ferner so ausgelegt, daß bei einem von außen erteilten Schaltbefehl, wie dies durch einen Pfeil 13 angedeutet ist, zunächst ein kurzer Einschaltimpuls an den Frequenzumrichter 2 gegeben wird, der daraufhin den Antriebsmotor 1 für die Dauer des Einschaltimpulses an Spannung legt. Daraufhin beginnt sich der Läufer 14 des Antriebsmotors 1 zu drehen. Die Drehbewegung des Läufers 14 wird über die Welle 6 auf das Getriebe 3 übertragen. Sobald der in der Übertragungsstrecke bestehende Losewinkel durchlaufen ist, wirkt die Antriebskraft des Läufers 14 auf den Ventilteller 8. Infolge der in dem drehenden Läufer 14 gespeicherten kinetischen Energie kommt es nach dem Durchlaufen des Losewinkels zu einem Drehmomentstoß.

Überschreitet die Größe dieses Drehmomentstoßes die Losbrechkraft des Ventiltellers 8, dann wird dieser aus seiner betreffenden Endlage herausbewegt. Mittels des Sensors 11 kann diese Bewegung des Ventiltellers 8 festgestellt werden. Der Sensor 11 gibt ein entsprechendes Stellungssignal an die Steuereinrichtung 12. Durch diese werden dann weitere Einschaltimpulse unterbunden und der Frequenzumrichter 2 wird auf normalen, das Verstellen des Ventiltellers 8 bewirkenden Betrieb umgestellt.

Wird der Ventilteller 8 nicht gleich bei dem erstem Drehmomentstoß aus seiner jeweiligen Endlage gelöst, so werden durch die Steuereinrichtung 12 wiederholt Einschaltimpulse ausgelöst, wobei der Antriebsmotor 1 abwechselnd in der einen und der anderen Drehrichtung eingeschaltet wird. Auf diese Weise steht für jeden Einschaltvorgang die volle Größe des in der Übertragungsstrecke vorhandenen Losewinkels zur Verfügung. Durch diese wiederholt auf den Ventilteller 8 ausgeübten Drehmomentstöße gelingt in der Regel ein Lösen des Ventiltellers 8 aus seiner betreffenden Endlage. Sollte der Ventilteller 8 nach einer vorgegebenen Anzahl von Drehmomentstößen nicht gelöst worden sein, dann erfolgt durch die Steuereinrichtung 12 ein Abbruch der Einschaltimpulse und gegebenenfalls eine Fehlermeldung.

## Patentansprüche

1. Mit einer Armatur gekoppelter elektromotorischer Stellantrieb, dessen Antriebsmotor über eine Steuereinrichtung in der einen oder anderen Drehrichtung ansteuerbar ist,
**dadurch gekennzeichnet,**
daß vor einem betriebsmäßigen Verstellvorgang der Armatur (4) Schwingungen in diese eingeleitet oder Stöße auf diese ausgeübt werden.

2. Stellantrieb nach Anspruch 1,
**dadurch gekennzeichnet,**
daß dem Antriebsmotor (1) über die Steuereinrichtung (12) kurze Einschaltimpulse zumindest für die eine Drehrichtung erteilbar sind.

3. Stellantrieb nach Anspruch 2,
**dadurch gekennzeichnet,**
daß die zeitliche Länge der Einschaltimpulse mindestens der Zeit für das Durchfahren des zwischen dem Antriebsmotor (1) und dem verstellbaren Glied (8) der Armatur (4) bestehenden Losewinkels entspricht.

4. Stellantrieb nach Anspruch 1 ,2 oder 3,
**dadurch gekennzeichnet,**
daß dem Antriebsmotor (1) abwechselnd Einschaltimpulse für die eine und andere Drehrichtung erteilbar sind.

5. Stellantrieb nach Anspruch 1, 2, 3oder 4,
**dadurch gekennzeichnet,**
daß der Steuereinrichtung (12) ein die Drehrichtung der Welle (6) des Antriebsmotors (1) oder die Verstellbewegung des verstellbaren Armaturgliedes (8) erfassender Sensor (11) zugeordnet ist.
